# EUROPÄISCHE PATENTSCHRIFT

(11) **EP 2 663 769 B1**
(45) Veröffentlichungstag und Bekanntmachung des Hinweises auf die Patenterteilung: **28.09.2016**
(21) Anmeldenummer: 11801599.9
(22) Anmeldetag: 14.12.2011
(51) Int. Cl.: F03D 80/00, F03D 1/06, F02C 7/20, F03D 80/80, F03D 15/00

(54) **ANORDNUNG VON BAUTEILEN EINER WINDENERGIEANLAGE**
ARRANGEMENT OF COMPONENTS OF A WIND POWER PLANT
AGENCEMENT D'ÉLÉMENTS D'UNE ÉOLIENNE

(30) Priorität: 10.01.2011 DE 102011002488
(43) Veröffentlichungstag der Anmeldung: 20.11.2013
(73) Patentinhaber: Senvion GmbH, 22297 Hamburg (DE)
(72) Erfinder: SCHNETGÖKE, Hanno, 24105 Kiel (DE)
(74) Vertreter: Seemann, Ralph
(86) Internationale Anmeldenummer: PCT/EP2011/006305
(87) Internationale Veröffentlichungsnummer: WO 2012/095140

(56) Entgegenhaltungen:
- EP-A1- 2 075 466
- DE-A1-102007 014 861
- MEL SCHWARTZ: 'Encyclopaedia of materials, parts and finishes' 31 Dezember 2002, XP055156214
- BOB MILLER: 'Frequently asked questions about hardfacing', [Online] 08 März 2005, XP055156218 Gefunden im Internet: <URL:http://www.thefabricator.com/article/c uttingweldprep/frequently-asked-questions-a bout-hardfacing> [gefunden am 2014-12-02]

## Beschreibung

Die Erfindung betrifft eine Anordnung von zwei Bauteilen einer Windenergieanlage, wobei ein erstes Bauteil einen Flansch mit einer Flanschkontaktfläche aufweist und wobei das zweite Bauteil eine Anflanschfläche für den Flansch des ersten Bauteils oder das zweite Bauteil einen Flansch mit einer Flanschkontaktfläche aufweist, wobei die Flanschkontaktfläche des ersten Bauteils und die Anflanschfläche des zweiten Bauteils einander gegenüberliegend angeordnet sind oder wobei die Flanschkontaktflächen der beiden Bauteile einander gegenüberliegend angeordnet sind. Ferner betrifft die Erfindung eine Verwendung einer Beschichtung für eine Anordnung von Bauteilen einer Windenergieanlage, eine Windenergieanlage sowie ein Verfahren zum Bearbeiten eines Bauteils einer Windenergieanlage.

Im Stand der Technik ist beispielsweise unter Bezeichnung "5M" eine Windenergieanlage der Patentanmelderin bekannt, die eine Nennleistung von 5 Megawatt (MW) besitzt.

Um großvolumige Bauteile einer Windenergieanlage bei der Errichtung, Wartung oder Reparatur miteinander zu verbinden, sind Flanschverbindungen bzw. Schraubverbindungen zwischen den Bauteilen vorgesehen. Derartige Bauteile, die miteinander verbunden werden, sind beispielsweise die Rotorwelle und der Getriebeeingang sowie die Rotornabe und die Rotorwelle.

Darüber hinaus werden Schraubverbindungen eingesetzt bei der Verbindung des Rohrturms mit dem Drehlager sowie des Maschinenträgers einer Windenergieanlage mit den weiteren Bestandteilen einer Windenergieanlage, insbesondere die Verbindung zum Rotorlager, der Getriebeaufhängung, dem Achszapfen und dem (Ring-) Generator.

In DE 197 33 372 C1 ist ein Rotorblatt bzw. ein Rotor einer Windenergieanlage offenbart, wobei das Rotorblatt mittels Schraubverbindungen mit einem Flansch einer Rotornabe verbunden ist. Typischerweise ist hierbei der Flansch als metallischer Flansch ausgebildet. Das Rotorblatt selbst besteht im Wesentlichen aus einem glasfaserverstärkten Epoxyharz-Verbundmaterial.

DE 691 14 016 T2 offenbart allgemein eine Kupplung zwischen gegenüberliegenden Stirnflächen von zwei koaxialen, zusammen rotierenden Bauteilen, wobei die gegenüberliegenden Stirnflächen radial gegenüber der Achse der Bauteile verlaufen. Darüber hinaus sind die Stirnflächen der Bauteile mit einer Vielzahl von dicht benachbarten Furchenlinien versehen, die Riffel definieren.

Weiterhin offenbart DE 86 25 580 U1 allgemein eine Kupplung zum starren Verbinden zweier gleichachsiger und zum Übertragen von Drehmoment geeigneter Maschinenteile mit zwei Kupplungshilfen, die mit Stirnflächen aneinanderstoßen und durch Verbindungselemente miteinander verspannbar sind. Darüber hinaus ist vorgesehen, dass zwischen den Berührungsflächen im Bereich der axial spannenden Verbindungselemente eine Schicht aus körnigem Material aufgebracht ist.

Aus DE-A-10 2007 014 861 geht eine Anordnung von zwei Bauteilen einer Windenergieanlage hervor, wobei ein erstes Bauteil einen Flansch mit einer Flanschkontaktfläche aufweist und wobei das zweite Bauteil eine Anflanschfläche für den Flansch des ersten Bauteils aufweist, wobei die Flanschkontaktflächen der beiden Bauteile einander gegenüberliegend angeordnet sind und eine Flanschkontaktfläche eines Flansches und/oder die Anflanschfläche des zweiten Bauteils eine reibwerterhöhende Beschichtung aufweisen.

EP-A-2 075 466 zeigt ein Verfahren zum Verbinden einer mit niedriger Drehzahl drehenden Hauptwelle einer Windkraftanlage mit einer Antriebswelle eines Getriebes der Windkraftanlage, bei dem zwischen einer Anschlussfläche der Hauptwelle und einer damit zusammenwirkenden Anschlussfläche der Eingangswelle des Getriebes ein reibungserhöhendes Mittel, insbesondere eine Scheibe mit rauer Oberfläche, vorgesehen ist, wobei die beiden Anschlussflächen fest miteinander verbunden und einer Dauerlast ausgesetzt werden.

Im Dokument M. Schwartz, "Encyclopaedia of materials, parts and finishes", 31.12.2002, XP055156214, sind im Kapital "Diffusion Coatings" verschiedene Techniken zum Eindiffundieren von verschiedenen Elementen in metallische Oberflächen beschrieben. Hierdurch werden Härte und Widerstandsfähigkeit in Bezug auf Verschleiß, Korrosion und Oxidation verbessert.

Das Dokument von B. Miller, "Frequently asked questions about hardfacing", 8. März 2005 (2005-03-08), XP055156218, (URL:http://www.thefabricator.com/article/cuttingweldprep/frequent ly-asked-questions-about-hardfacing), betrifft die Oberflächenhärtung metallischer Bauteile. Beispielsweise wird Chromcarbid eingesetzt, um die Abriebsfestigkeit und Verschleißfestigkeit bei Hochtemperaturanwendungen zu verbessern.

Die Aufgabe der Erfindung besteht darin, großvolumige Bauteile einer Windenergieanlage unter Ausbildung einer hochfesten Verbindung miteinander zu verbinden.

Gelöst wird diese Aufgabe durch eine Anordnung von zwei Bauteilen einer Windenergieanlage, wobei ein erstes Bauteil einen Flansch mit einer Flanschkontaktfläche aufweist und wobei das zweite Bauteil einer Anflanschfläche für den Flansch des ersten Bauteils oder das
zweite Bauteil einen Flansch mit einer Flanschkontaktfläche aufweist, wobei die Flanschkontaktfläche des ersten Bauteils und die Anflanschfläche des zweiten Bauteils einander gegenüberliegend angeordnet sind oder wobei die Flanschkontaktflächen der beiden Bauteile einander gegenüberliegend angeordnet sind oder wobei die Flanschkontaktflächen der beiden Bauteile einander gegenüberliegend angeordnet sind, die dadurch weitergebildet ist, dass wenigstens eine Flanschkontaktfläche eines Flansches und/oder die Anflanschfläche des zweiten Bauteils eine äußere reibwerterhöhende Beschichtung aus einer Chrom-Stahl-Legierung aufweisen oder beide Flanschkontaktflächen der Flansche eine äußere reibwerterhöhende Beschichtung aus einer Chrom-Stahl-Legierung aufweisen, wobei die Verbindung der Bauteile als kraftschlüssige Verbindung ausgebildet ist.

Gemäß der Erfindung werden Bauteile einer Windenergieanlage mit einem Durchmesser von mehr als 0,5 m, vorzugsweise mehr als 1,0 m, weiter vorzugsweise mehr als 1,5 m, miteinander verbunden, wobei die zu verbindenden Bauteile jeweils einander zugewandte Kontaktflächen aufweisen und im verbundenen Zustand die Bauteile miteinander verspannt sind oder werden.

Bei der erfindungsgemäßen Anordnung der großvolumigen Bauteile ist es in einer Ausgestaltung vorgesehen, dass ein Bauteil einen Flansch mit einer entsprechenden Flanschkontaktfläche aufweist und das mit diesem Bauteil verbundene zweite Bauteil eine entsprechende Anflanschfläche für den Flansch des ersten Bauteils aufweist. In einer weiteren Ausgestaltung ist es im Rahmen der Erfindung vorgesehen, dass beide miteinander zu verbindenden oder verbundenen Bauteile jeweils einen Flansch mit jeweiligen Flanschkontaktflächen aufweisen.

Hierbei ist gemäß der Erfindung vorgesehen, dass die als Kontaktfläche ausgebildete Anflanschfläche des flanschfreien Bauteils eine, vorzugsweise aufgebrachte, Beschichtung aus einer Chrom-Stahl-Legierung aufweist und/oder wenigstens eine Flanschkontaktfläche eines Flansches eine, vorzugsweise aufgebrachte, Beschichtung aus einer Chrom-Stahl-Legierung aufweist. Dadurch ist bei der Verbindung der Bauteile jeweils wenigstens eine oder beide einander gegenüberliegenden angeordneten Kontaktflächen mit einer entsprechenden Chrom-Stahl-Legierungs-Schicht ausgebildet. Somit wird eine Verbindung von mechanisch belastenden Komponenten bzw. Bauteilen einer Windenergieanlage erreicht, wobei durch die Verwendung der Chrom-Stahl-Legierung als, vorzugsweise nachträglich, aufgebrachter oder aufgetragener Überzug auf eine der beiden Kontaktflächen der miteinander zu verbindenden oder verbundenen Bauteile eine kraftschlüssige Verbindung ausgebildet wird, die einen erhöhten Reibungskoeffizienten gegenüber einer Verbindung von Bauteilen ohne Chrom-Stahl-Legierung oder ohne Chrom-Stahl-Legierungs-Schicht auf den Kontaktflächen aufweist.

Im Rahmen der Erfindung wird unter einem Bauteil insbesondere eine Funktionsgruppe oder Systemgruppe bzw. eine Funktionseinheit oder Systemeinheit einer Windenergieanlage, z.B. eine Rotornabe, eine Rotorwelle, ein Getriebe, verstanden, die mit einer anderen Funktionsgruppe / Systemgruppe oder Funktionseinheit / Systemeinheit der Windenergieanlage über die erfindungsgemäße Verbindung, insbesondere Schraubverbindung oder Flanschverbindung, mechanisch gekoppelt ist oder wird. Insbesondere handelt es sich bei den Bauteilen oder Funktionseinheiten sowie Systemeinheiten um großvolumige Bauteile mit Gewichten von mehr als 100 kg bis hin zu mehreren Tonnen.

Insbesondere erfolgt im normalen Betrieb einer Windenergieanlage bei miteinander verbundenen Bauteilen keine Verschiebung der Kontaktflächen zueinander. Vorzugsweise weisen die mit einer Chrom-Stahl-Legierungs-Schicht versehenen Kontaktflächen der miteinander verbundenen Bauteile einen Durchmesser größer 0,5m, bevorzugt größer 1,0 m, auf. Dabei weisen zwei miteinander zu verbindende Bauteile jeweils einander zugewandte Kontaktflächen auf, wobei die Kontaktflächen im verbundenen Zustand miteinander verspannt werden oder sind und wobei eine Beschichtung aus der Chrom-Stahl-Legierung als Schicht oder Überzug auf die Kontaktflächen aufgebracht ist.

Es hat sich in der erfindungsgemäßen Anwendung gezeigt, dass der Beschichtungswerkstoff Chromstahl für statische Reibflächen bei torsionsbelasteten Bauteilen einer Windenergieanlage eine überraschend stark reibwerterhöhende Wirkung bei gleichzeitig hoher Wirtschaftlichkeit, großer Reparaturfreundlichkeit und vereinfachtem Beschichtungsverfahren aufweist.

Darüber hinaus zeichnet sich eine Ausgestaltung der Anordnung dadurch aus, dass die Beschichtung oder die Beschichtungen auf den Flanschkontaktflächen oder Anflanschflächen der Bauteile aus der Chrom-Stahl-Legierung unter Verwendung eines Lichtbogenverfahrens auf die jeweilige Flanschkontaktfläche und/oder Anflanschfläche, vorzugsweise als Schicht(en) oder nach Art eines Überzugs, aufgebracht ist oder sind. Insbesondere werden die Chrom-Stahl-Legierungs-Schichten nach der Herstellung der Bauteile und vor dem Zusammenbau der einzelnen Komponenten einer Windenergieanlage auf die Bauteile aufgetragen.

In einer Alternative ist vorgesehen, dass die Chrom-Stahl-Legierungs-Schichten auf einer Windenergieanlage z.B. bei der Durchführung von Wartungsarbeiten auf die Bauteile als Beschichtung der Kontaktflächen aufgebracht werden. Hierdurch wird bei der Reparatur von Bauteilen oder Wartung der Windenergieanlage gegebenenfalls eine (bereits) vorhandene, andersartige Beschichtung oder Schicht von den Kontaktflächen der Bauteile entfernt, so dass die vorbereiteten Kontaktflächen der miteinander zu verbindenden Bauteile mit einer Beschichtung oder Schicht aus der Chrom-Stahl-Legierung beschichtet werden.

Somit wird im Rahmen der Erfindung durch Chromstahl ein Beschichtungswerkstoff beispielsweise für die Beschichtung von Flanschverbindungen im Triebstrang von Windenergieanlagen bereitgestellt, wobei das Aufbringen der Chrom-Stahl-Legierungs-Schicht einfach und kostengünstig ist. Dadurch, dass das Aufbringen der Schicht aus der Chrom-Stahl-Legierungs-Schicht auch nachträglich z.B. bei der Durchführung von Wartungsarbeiten an bereits errichteten Windenergieanlagen, möglich ist, ist die Handhabung zudem reparaturfreundlich und anwendungsfreundlich. Außerdem ist es möglich, durch das Beschichten der Kontaktflächen von Bauteilen bei Wartungsarbeiten an einer Windenergieanlage mit einer Chrom-Stahl-Legierung die Eigenschaften der vorhandenen Bauteile zu verbessern.

Das Beschichtungsverfahren ist in der Anwendung sehr einfach und flexibel, so dass auch große oder großvolumige Bauteile auf einer Windenergieanlage beschichtet werden können. Vorzugsweise beträgt die (Schicht-)Dicke der Beschichtung mit der Chrom-Stahl-Legierung weniger als 1 mm oder Bruchteile eines Millimeters. Vorzugsweise beträgt die Schichtdicke der auf die Kontaktflächen aufgetragenen Chrom-Stahl-Legierung zwischen 10 µm bis 1000 µm, insbesondere zwischen 400 µm und 600 µm.

Insbesondere sind die Bauteile unter Verwendung von Verbin-dungselementen, vorzugsweise Schrauben oder Bolzen, miteinander vorgespannt.

Höhere Reibungskoeffizienten oder Reibwerte ermöglichen es, die Flansche oder Bauteile insgesamt kompakter zu bauen. Die erreichbaren Reibwerte oder Reibungskoeffizienten nehmen mit zunehmender mechanischer Festigkeit des Grundmaterials ab.

Ein weiterer großer Vorteil der Chrom-Stahl-Legierungs-Beschich-tung gegenüber der aus dem Stand der Technik bekannten Spritzverzinkung von Kontaktflächen von Bauteilen einer Windenergiean-lage liegt darin, dass beidseitig spritzverzinkte Flansche unter Vorspannung zur Verklebung neigen, wodurch die Verbindung der Bauteile nur schwer und zumeist nicht ohne Beschädigung der Beschichtung lösbar sind, zum Beispiel bei Instandhaltungsarbeiten. Durch das Aufbringen einer Chrom-Stahl-Legierungs-Schicht auf die Kontaktflächen der Bauteile (anstelle einer Spritzverzinkung) sind die Bauteile bei Lösen der Verbindung beschädigungsfrei voneinander lösbar oder trennbar.

Des Weiteren ist es bevorzugt, dass zwischen den Flanschkontakt-flächen der Flansche ein oder mehrere Verbindungszwischenkörper angeordnet sind oder dass zwischen der Flanschkontaktfläche des ersten Bauteils und der Anflanschfläche des zweiten Bauteils ein oder mehrere Verbindungszwischenkörper angeordnet sind. Die Verwendung der Verbindungszwischenkörper zwischen den miteinander zu verbindenden Bauteilen hat den Vorteil, dass der Reibungskoeffizient, der auch als Reibwert bezeichnet wird, erhöht ist, ohne dass die zu verbindenden Bauteile direkt beschichtet werden müssen. Dazu ist es vorteilhaft, die Beschichtungen auf wesentlich kleinere, kompaktere Verbindungszwischenkörper aufzubringen.

Außerdem ist es in einer Ausgestaltung bevorzugt, dass der oder die Verbindungszwischenkörper wenigstens auf einer oder auf beiden Kontaktflächen, die den Kontaktflächen der Flansche oder der Anflanschfläche des zweiten Bauteils gegenüberliegend angeordnet sind, mit einer Beschichtung aus einer Chrom-Stahl-Legierung versehen sind.

Dazu sind vorteilhafterweise Verbindungszwischenkörper platten-förmig oder klötzchenartig ausgebildet, wodurch sich eine vereinfachte Handhabung der Verbindungszwischenkörper bei der Montage ergibt. Dadurch, dass kleine Segmente als mit einer Chrom-Stahl-Legierung beschichtete Verbindungszwischenkörper zwischen einer Anflanschfläche und einem Flansch eines Bauteils oder zwischen den Flanschkontaktflächen zweier Flansche angeordnet sind, ist es möglich, dass kleine Segmente preiswert beschichtbar sind oder beschichtet sind. Nach der Montage oder der Reparatur der Bauteile können auch die als Zwischenelemente angeordneten Verbindungskörper auf einfache Weise ausgetauscht werden, was die Handhabung der Verbindungszwischenkörper in entsprechender Weise erhöht.

Vorteilhafterweise ist weiter vorgesehen, dass die Verbindungszwischenkörper bei oder durch Anordnung zwischen dem ersten Bauteil und dem Bauteil eine Art segmentierten Ring, insbesondere segmentierten Kreisring, oder Teile davon bilden.

Bevorzugterweise sind die Verbindungen mit dem ersten Bauteil und dem zweiten Bauteil mechanisch unter Verwendung von Montier-elementen, insbesondere Schrauben, Klammern oder dergleichen, verbunden.

Durch die Verwendung der Montierelemente werden die segmentierten Verbindungszwischenkörper beispielsweise mit einem Bauteil verbunden, so dass anschließend auf der einen Seite der Verbindungszwischenkörper das zweite Bauteil mit einer Kontaktfläche angeordnet ist.

Weiterhin ist beispielsweise zur Ausbildung einer Verbindung zwischen zwei Bauteilen vorgesehen, dass die Flanschkontaktfläche des ersten Bauteils und die Anflanschfläche des zweiten Bauteils oder die Flanschkontaktflächen des zweiten Bauteils ringartig und/oder geschlossen ausgebildet sind.

Insbesondere sind das erste Bauteil als Rotorwelle und das zweite Bauteil als Rotorarretierscheibe ausgebildet. In einer Alternative sind das erste Bauteil als Getriebeeingangswelle und das zweite Bauteil als Rotorarretierscheibe ausgebildet. In einer vorteilhaften Ausgestaltung ist das erste Bauteil als Rotornabe sowie bzw. und das zweite Bauteil als Rotorarretierscheibe oder als Rotorwelle ausgebildet.

Vorteilhafterweise ist die Verbindung der Bauteile, die beispielsweise einen Anschlussdurchmesser von 0,5 Meter bis 2,5 Meter aufweisen, als kraftschlüssige, insbesondere lösbare, Verbindung, insbesondere querkraftbelastete und/oder torsionsbelastete Verbindung oder Schraubverbindung ausgebildet.

Des Weiteren sind das erste Bauteil und/oder das zweite Bauteil, die miteinander verbunden werden oder sind, bevorzugt als Gussbauteil ausgebildet. Alternativ ist die Ausführung als Stahlbauteil bevorzugt.

Eine weitere Lösung der Aufgabe erfolgt durch eine Verwendung einer Beschichtung für eine Anordnung von Bauteilen einer Wind-energieanlage, wobei die Anordnung nach einem der vorangehenden Ausführungsbeispiele ausgebildet ist.

Außerdem wird die Aufgabe gelöst durch eine Windenergieanlage, mit einer voranstehend beschriebenen Anordnung von Bauteilen. Zur Vermeidung von Wiederholungen wird auf die obigen Ausführungen ausdrücklich verwiesen.

Die Aufgabe wird außerdem durch ein Verfahren zum Bearbeiten wenigstens eines Bauteils einer Windenergieanlage für eine voranstehend beschriebene Anordnung von Bauteilen gelöst, wobei insbesondere das oder die Bauteile der Windenergieanlage mit einem Durchmesser von mehr als 0,5 m, vorzugsweise mehr als 1,0 m, weiter vorzugsweise mehr als 1,5 m, ausgebildet sind und miteinander verbunden werden oder sind, wobei insbesondere die zu verbindenden Bauteile jeweils einander zugewandte Kontaktflächen aufweisen und im verbundenen Zustand die Bauteile miteinander verspannt sind oder werden, das dadurch weitergebildet wird, dass wenigstens eine Kontaktfläche der miteinander zu verbindenden Bauteile mit einer Chrom-Stahl-Legierung beschichtet wird.

Durch dieses erfindungsgemäße Verfahren wird als Bauteil beispielsweise ein Flansch eines Bauteils einer Windenergieanlage (z.B. Rotorwelle, Rotornabe etc.) bearbeitet, so dass der Flansch instandgesetzt wird.

Zur Instandsetzung des Flansches wird bei einer bestehenden Windenergieanlage die Verbindung oder die (verbundene) Anordnung der miteinander verbundenden Bauteile in einem ersten Schritt gelöst. Anschließend wird mindestens eine für die Verbindung der Bauteile vorgesehene Kontaktfläche der Bauteile gesäubert. Der Säuberungsschritt umfasst dabei in einer Ausgestaltung insbesondere die Entfernung einer vorhandenen Beschichtung auf der oder auf den Kontaktflächen. Ist beispielweise eine vorhandene Beschichtung, z.B. eine Spritzverzinkung, einer Kontaktfläche eines Bauteils beschädigt, so ist im Rahmen der Erfindung vorgesehen, dass die beschädigte oder schadhafte Schicht auf der Bauteil-Kontaktfläche entfernt wird. Bei zwei miteinander verbundenen oder (wieder) zu verbindenden Bauteilen werden insbesondere beide einander gegenüber angeordneten Kontaktflächen der jeweiligen Bauteile für die vorgesehene Beschichtung mit einer Chrom-Stahl-Legierung präpariert, d.h. gesäubert oder gereinigt.

Im Anschluss an die Aufbereitung sowie Säuberung der Kontaktflächen der Bauteile wird eine Beschichtung oder eine (äußere) Schicht aus der Chromstahl-Legierung auf die jeweilige Kontaktfläche des entsprechenden Bauteils aufgebracht.

Beim nachträglichen Aufbringen der Chrom-Stahl-Legierungs-Schichten auf die Kontaktflächen der Bauteile z.B. bei der Durchführung von Wartungsarbeiten ist es im Rahmen des erfindungsgemäßen Verfahrens vorgesehen, dieses im Maschinenhaus einer montierten, bestehenden Windenergieanlage durchzuführen. Dabei wird nachträglich die Chrom-Stahl-Legierungs-Beschichtung in einer bereits errichteten Windenergieanlage beispielsweise unter Anwendung eines Lichtbogenverfahrens auf den Bauteilen ausgebildet.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch im Querschnitt Verbindungen einer Rotorwelle mit einer Rotornabe und einem Getriebe einer Windenergieanlage im Ausschnitt,
- Fig. 2: schematisch in einer Detailansicht den Verbindungsübergang der Rotorwelle mit dem Getriebe,
- Fig. 3: eine schematische Detailansicht eines Verbindungsübergangs der Rotorwelle mit dem Getriebe gemäß einer Ausführungsform,
- Fig. 4a: schematisch die Flanschverbindung von Rotornabe mit der Rotorwelle in einer Detailansicht,
- Fig. 4b: eine schematische Ansicht von Kreissegmentzwischenkörpern.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

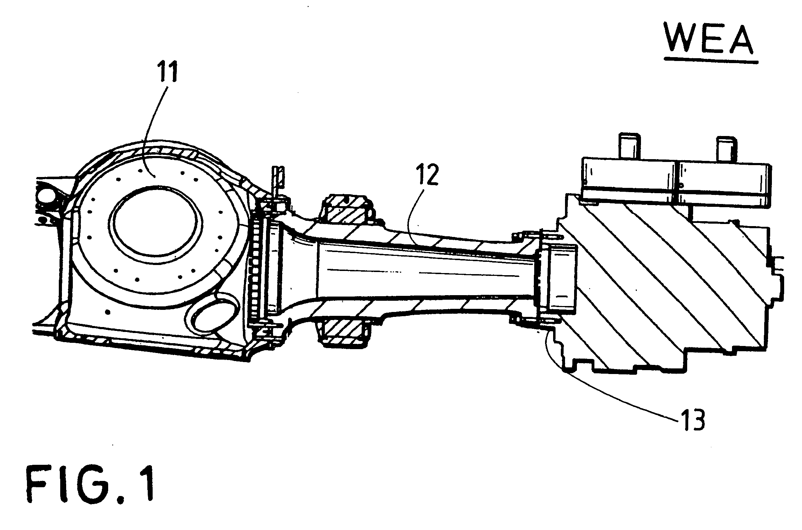

Fig. 1 zeigt im schematischen Querschnitt die verbundene Anordnung einer Rotornabe 11 mit einer Rotorwelle 12 und einem Verbindungsteil 13 eines entsprechenden Getriebes einer Windenergieanlage. Die Rotornabe 11, die Rotorwelle 12 und das im Schnittbild nicht weiter detaillierte Getriebe, welches im vorderen Bereich das Verbindungsteil 13 aufweist, sind Teile einer schematisch bezeichneten Windenergieanlage WEA.

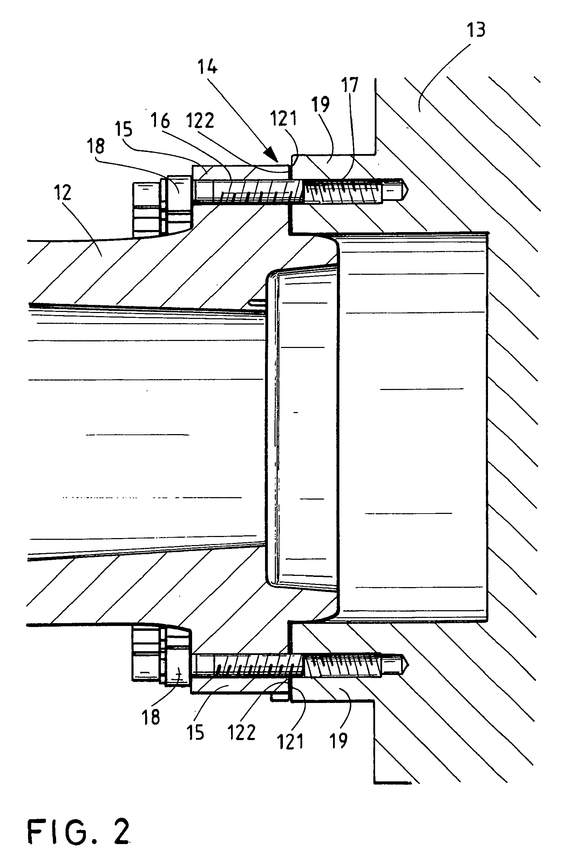

In Fig. 2 ist in einer schematischen Detailansicht der Verbindungsübergang zwischen einer Rotorwelle 12 und einem Getriebe der Windenergieanlage WEA schematisch dargestellt. Die Rotorwelle 12 ist mit dem Verbindungsteil 13 des Getriebes mittels einer Flanschverbindung 14 verbunden. Hierbei weist die Rotorwelle 12 an den dem Verbindungsteil 13 zugewandten Enden einen Flanschring 15 auf, der über entsprechende Bohrungen 16 zur Aufnahme von Schrauben verfügt. Die Bohrungen 16 sind ringmäßig über den Umfang des Flanschringes 15 angeordnet. Das Verbindungsteil 13 des Getriebes weist auf der der Rotorwelle 12 zugewandten Seite korrespondierende Sacklochbohrungen 17 auf, die entsprechende Gewinde besitzen. Von der Rotorwellenseite werden Schrauben 18 mit Gewinde in die Bohrungen 16 der Rotorwelle 12 und die Bohrungen 17 des Verbindungsteils 13 angebracht, so dass die Rotorwelle 12 mit dem Verbindungsteil 13 unter Ausbildung einer Vorspannung verbunden wird.

Das Verbindungsteil 13 weist an der der Rotorwelle 12 gegenüberliegenden Seite einen Flanschring 19 auf, der eine Flanschkontaktfläche 122 besitzt. Ferner verfügt der Flanschring 15 der Rotorwelle 12 ebenfalls über eine Flanschkontaktfläche 121, die der Flanschkontaktfläche 122 des Flanschrings 19 des Verbindungsteils 13 gegenüberliegend angeordnet ist.

In einer Ausgestaltung ist die Flanschkontaktfläche 122 des Flanschringes 15 mit einer, vorzugsweise nachträglich aufgebrachten, Beschichtung aus einer Chrom-Stahl-Legierung versehen. Zusätzlich kann auch die Flanschkontaktfläche 121 des Flanschringes 19 des Verbindungsteils 13 ebenfalls mit einer Chrom-Stahl-Legierung versehen sein.

In einer weiteren Ausführungsform ist es ebenso denkbar, dass die Flanschkontaktfläche 122 des Flanschringes 19 mit einer Chrom-Stahl-Legierung beschichtet ist, während die der Flanschkontaktfläche 122 gegenüberliegende Flanschkontaktfläche 121 des Flanschringes 15 nicht mit einer Chrom-Stahl-Legierung versehen ist.

Durch die Verwendung einer Chrom-Stahl-Legierung als Beschichtung der Flanschkontaktflächen 121, 122 wird eine reibwerterhöhende Beschichtung zwischen der Rotorwelle 12 und dem Verbindungsteil 13 ausgebildet, so dass durch Anziehen der Schrauben 18 der Reibwert bzw. der Reibwertkoeffizient und der Reibschluss zwischen der Rotorwelle und dem Verbindungsteil 13 erhöht wird bzw. ist.

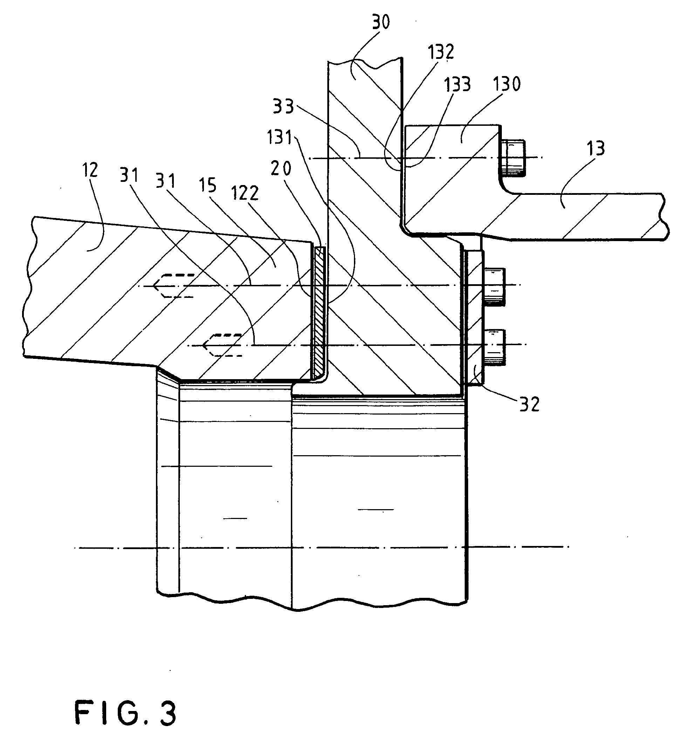

In Fig. 3 ist ein weiteres Ausführungsbeispiel einer Verbindung von einer Rotorwelle 12 mit einem Getriebeflansch 130 eines nicht weiter dargestellten Getriebes entsprechend der in Fig. 2 gezeigten Ausführungsform schematisch dargestellt. Hierbei ist zwischen der Rotorwelle 12 mit dem Flanschring 15 und dem Getriebeflansch 130 eine Arretierscheibe 30 angeordnet, die sowohl eine Kontaktfläche 131 zur Rotorwelle 12 als auch eine Kontaktfläche 132 zum Getriebeflansch 130 aufweist.

Um die Verbindung zwischen der Rotorwelle 12 und der Arretierscheibe 30 bzw. zwischen der Rotorwelle 12 und dem Getriebeflansch 130 in ihrer Festigkeit zu verbessern, sind die Kontaktflächen 131, 132, die als Anflanschflächen für den Flansch der Rotorwelle 12 und für den Getriebeflansch 130 ausgebildet sind, mit einer Beschichtung aus einer Chrom-Stahl-Legierung auf der Oberfläche versehen.

Ferner ist die Arretierscheibe 30 mit Durchgangslöchern versehen, so dass schematisch eingezeichnete Schrauben 31, die an der Getriebeflanschseite eingesetzt werden, einen Unterlegring 32, die Arretierscheibe 30 und die vorgesehenen Durchgangslöcher von Verbindungszwischenkörpern 20 durchsetzen und in die Sacklochbohrungen der Rotorwelle 12 münden.

Zwischen der Kontaktfläche 131 und der Flanschkontaktfläche 122 des Flanschrings 15 der Rotorwelle 12 sind Verbindungszwischenkörper 20 angeordnet, wobei die Verbindungszwischenkörper 20 ebenfalls mit einer Chrom-Stahl-Legierung als Beschichtung ausgebildet sein können.

Weiterhin sind zwischen der Arretierscheibe 30 und dem Getriebeflansch 130 die Kontaktfläche 132 und die Flanschkontaktfläche 133 des Getriebeflansches 130 gegenüberliegend voneinander angeordnet, wobei eine der beiden Kontaktflächen 132, 133 wenigstens mit einer Chrom-Stahl-Legierung ausgebildet ist. Hierbei kann sowohl die Kontaktfläche 131 als auch die Flanschkontaktfläche 133 des Getriebeflansches 130 eine reibwerterhöhende Chrom-Stahl-Legierung aufweisen.

In einer weiteren Ausgestaltung ist es denkbar, dass die als Anflanschfläche ausgebildete Kontaktfläche 132 der Arretierscheibe 30 und die Flanschkontaktfläche 133 des Getriebeflansches 130 jeweils mit einer äußeren Chrom-Stahl-Legierung versehen sind.

Um die Arretierscheibe 30 mit dem Getriebeflansch 130 zu verbinden, werden diese unter Verwendung von schematisch eingezeichneten Schrauben 33 miteinander verspannt.

Außerdem ist in einer (hier nicht dargestellten) Ausgestaltung vorgesehen, dass zwischen der Arretierscheibe 30 und dem Getriebeflansch 130 Verbindungszwischenkörper, wie sie zwischen der Arretierscheibe 30 und dem Flanschring 15 der Rotorwelle 12 angeordnet sind. Auch hierbei werden der Getriebeflansch 130 und die Arretierscheibe 30 mit schematisch eingezeichneten Schrauben 33 verbunden. Bei den Verbindungszwischenkörpern handelt es sich um erfindungsgemäß mit einer Chrom-Stahl-Legierung, vorzugsweise beidseitig, beschichtete Verbindungszwischenkörper, so dass sich verbesserte kraftschlüssige Verbindungen mit höheren Reibschlüssen sowie höheren Reibungskoeffizienten ergeben.

Bei der in Fig. 3 gezeigten Ausführungsform handelt es sich um die mehrfache Kombination oder eine Hintereinanderschaltung von mehreren erfindungsgemäßen Verbindungen.

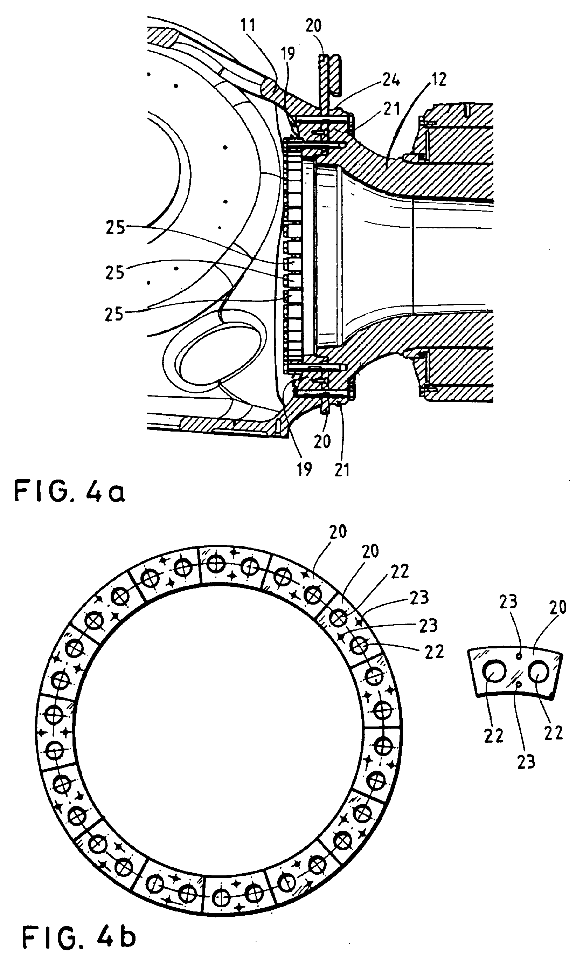

In Fig. 4a ist weiterhin eine Detailansicht der Verbindung zwischen der Rotorwelle 12 und der Rotornabe 11 (vgl. Fig. 1) im Querschnitt dargestellt. Hierzu verfügt die Rotornabe 11 an ihrer Innenseite über einen Flanschring 19 mit entsprechenden Bohrungen, in die Bolzen bzw. Schrauben eingesetzt werden und mit der Stirnseite der Rotorwelle 12 verbunden werden. Dazu sind an der Rotorwelle 12 entsprechende Sacklochbohrungen zur Aufnahme der Schrauben bzw. Bolzen vorgesehen.

Die Schrauben bzw. Bolzen werden von der Innenseite der Rotornabe 11 eingesetzt und mit der Rotorwelle 12 verbunden. Weiterhin ist zur Ausbildung einer wechselseitigen Flanschverbindung an der Rotorwelle 12 ein Flanschring 21 mit entsprechenden Bohrungen zur Aufnahme von Bolzen bzw. Schrauben vorgesehen. Hierbei werden von der der Rotornabe 11 abgewandten Seite die Bolzen in die Bohrungen des Flanschringes 21 eingesetzt, so dass die Bolzen bzw. Schrauben entsprechend ausgebildete (Sackloch- oder Durchgangs-) Bohrungen an der Rotornabe 11 durchdringen, wodurch die Bolzen der äußeren Reihe des Flanschringes 21 entgegen den Bolzen der inneren Reihe des Flanschringes 19 der Rotornabe 11 angeordnet sind. Hierbei ist der Lochkreis der Bohrungen des Flanschrings 21 größer als der Lochkreis der Bohrungen des Flanschringes 19.

Insgesamt wird dadurch eine zweireihige Schraubenflanschverbindung der beiden mechanisch hochbelasteten Bauteile ermöglicht, wobei die Montage dadurch erfolgt, dass die Rotornabe und die Rotorwelle zueinander ausgerichtet werden, anschließend die Verschraubung der Reihe von Bolzen am außen liegenden Flanschring 21 der Rotorwelle 12 erfolgt und danach die Verbindungselemente in Form von Bolzen oder Schrauben im Inneren der Rotornabe 11 am innen liegenden Flanschring 19 verschraubt werden. Anschließend werden die Bolzen bzw. Schrauben mit einer vorbestimmten Vorspannkraft verspannt. Hierdurch wird eine robuste Flanschverbindung der Rotornabe 11 mit der Rotorwelle 12 ermöglicht.

Durch Hülsen 25 unter den Schraubenköpfen der inneren Schraubenreihe ist es möglich, zwecks Standardisierung einheitliche Schraubenlängen zu verwenden. Auf dem äußeren Flanschring 21 ist eine Spur 24 angeordnet, die als Kontaktbahn für einen (nicht dargestellten) Blitzableiter fungiert.

Um eine reibwerterhöhte Verbindung zwischen der Rotornabe 11 und der Rotorwelle 12 auszubilden, ist zwischen den beiden Enden der Rotorwelle 12 und der Rotornabe 11 bzw. zwischen den Flanschringen 19 und dem Flanschring 21 eine Reihe von Verbindungszwischenkörpern 20 angeordnet, die zu beiden Kontaktflächen der Flanschringe 19, 21 mit einer Chrom-Stahl-Legierung beschichtete Oberflächen aufweisen, so dass der Reibschluss bei Verspannung der Bolzenreihe an den Flanschringen 19, 21 zu einem besseren Reibschluss führt.

Durch die erfindungsgemäßen Verbindungszwischenkörper 20 mit ihren reibwerterhöhenden Beschichtungen aus Chrom-Stahl zu beiden Seiten der Bauteile, Rotornabe 11 und Rotorwelle 12, wird eine Anordnung zum Verhindern von Relativbewegungen zwischen den gegeneinander verspannten, zusammenwirkenden Bauteilen (Rotornabe 11 und Rotorwelle 12) erreicht.

Insbesondere handelt es sich bei der Rotornabe 11 um ein Bauteil aus Gusswerkstoff, z.B. Kugelgraphitguss, oder aus einfachem Baustahl, wobei die Kontaktfläche des Flanschringes 21 zur Rotornabe bevorzugt mechanisch glatt, z.B. RZ 16, bearbeitet worden ist.

Darüber hinaus ist die Rotorwelle 12 als zweites Bauteil als Stahlbauteil (Baustahl oder Vergütungsstahl) oder als Gussbauteil ausgeführt. Bevorzugt kann die Kontaktfläche zur Rotornabe 11 sandgestrahlt sein, z.B. SA3, wobei die Oberfläche in weiteren Ausführungsformen auch gehärtet sein kann.

Die durch die Verbindungselemente bzw. Bolzen aufgebrachte Vorspannung zwischen der Rotorwelle 12 und der Rotornabe 11 sollte an den Kontaktflächen Flächenpressungen im Bereich von 60 bis 220 N/mm², vorzugsweise zwischen 90 und 200 N/mm², erreichen.

Der Flanschring 19 der Rotornabe 11 weist Bohrungen auf, die kreisförmig angeordnet sind, wobei der Anschlussbereich der Rotornabe 11 zur Rotorwelle 12 am Flanschring 19 einen Durchmesser von mehr als 0,5 m im Allgemeinen aufweist.

Aus Figur 4a ist weiterhin zu ersehen, dass die Verbindungszwischenkörper 20 gleichzeitig als Arretierscheibe für eine Rotorarretierung genutzt werden. Die Arretierscheibe besteht aus drei identischen Segmenten, die als Verbindungszwischenkörper 20 ausgeführt sind. Die Arretierung erfolgt über zwei Arretiervorrichtungen, bei denen nicht dargestellte Bolzen durch die Bolzenaufnahmen geschoben werden. Insgesamt mehrere Bolzenaufnahmen sind so positioniert, dass jedes Rotorblatt in vertikaler und horizontaler Position arretierbar ist.

In Figur 4b ist eine Ausführung der Anordnung von Verbindungszwischenkörper 20 an einem Bauteil bzw. an einem Flansch eines Bauteils in einer schematischen Ansicht dargestellt, wobei im linken Bereich jeweils eine kreisförmige Anordnung der Verbindungszwischenkörper 20 und im rechten Bereich der Figuren jeweils einer Einzelansicht der Verbindungszwischenkörper 20 dargestellt ist.

Die Verbindungszwischenkörper 20 sind beispielsweise etwa 5 mm stark und 200 bis 600 mm lang. Kleinere Elemente reduzieren die Beschichtungskosten, erhöhen aber den Montageaufwand, so dass im Einzelfall die genauen Abmessungen an die jeweilige bevorzugte sowie vorbestimmte Anwendung anzupassen sind.

Mittels der einseitig mit einer Chrom-Stahl-Legierung beschichteten, vorzugsweise beidseitig zu den Kontaktflächen von Bauteilen beschichteten, Verbindungszwischenkörper 20 zwischen den Kontaktflächen von zwei Bauteilen, insbesondere den Kontaktflächen von einer Flanschverbindung zwischen den Bauteilen, wird eine Art segmentierter Ring aus den Verbindungszwischenkörpern 20 gebildet. Die Verbindungszwischenkörper 20 sind als Teilsegment einer kreisförmigen Anordnung ausgebildet.

Die Verbindungszwischenkörper 20 können ein oder mehrere als Durchgangslöcher ausgebildete Bohrungen 22 aufweisen, so dass die Verbindungszwischenkörper 20 von Bolzen oder Schrauben einer Flanschverbindung zwischen zwei zu verbindenden Bauteilen durchsetzt werden. Darüber hinaus verfügen die Verbindungszwischenkörper 20 über kleinere Bohrungen 23, so dass Montierelemente in Form von versenkten Schrauben die Bohrungen 23 durchsetzen, wodurch beispielsweise eine Montage der Verbindungszwischenkörper 20 auf einem Flanschring ermöglicht bzw. vereinfacht wird.

Hierdurch können durch Einbringen von Schrauben oder anderen Montierelementen in die Bohrungen die Verbindungszwischenkörper 20 an den Kontaktflächen der Bauteile montiert werden, wobei vorzugsweise die Kontaktflächen entsprechend Sacklochbohrungen zur Aufnahme von Gewinden aufweisen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 11: Rotornabe
- 12: Rotorwelle
- 13: Verbindungsteil (Getriebe)
- 14: Flanschverbindung
- 15: Flanschring
- 16: Bohrung
- 17: Bohrung
- 18: Schrauben
- 19: Flanschring
- 20: Verbindungszwischenkörper
- 21: Flanschring
- 22: Bohrung
- 23: Bohrung
- 24: Spur
- 25: Hülse
- 30: Arretierscheibe
- 31: Schrauben
- 32: Unterlegring
- 33: Schrauben
- 121: Flanschkontaktfläche
- 122: Flanschkontaktfläche
- 130: Getriebeflansch
- 131: Kontaktfläche
- 132: Kontaktfläche
- 133: Flanschkontaktfläche

- WEA: Windenergieanlage

## Patentansprüche

1. Anordnung von zwei Bauteilen (12, 13, 30) einer Windenergieanlage, wobei ein erstes Bauteil (12, 13) einen Flansch (15, 130) mit einer Flanschkontaktfläche (121, 122, 133) aufweist und wobei das zweite Bauteil (30) eine Anflanschfläche (131, 132) für den Flansch (15, 130) des ersten Bauteils (12, 13) oder das zweite Bauteil (12, 13) einen Flansch (15, 130) mit einer Flanschkontaktfläche (122, 133) aufweist, wobei die Flanschkontaktfläche (122, 133) des ersten Bauteils (12, 13) und die Anflanschfläche (131, 132) des zweiten Bauteils (30) einander gegenüberliegend angeordnet sind oder wobei die Flanschkontaktflächen (122, 121) der beiden Bauteile (12, 13, 30, 130) einander gegenüberliegend angeordnet sind, **dadurch gekennzeichnet, dass** wenigstens eine Flanschkontaktfläche (121, 122, 133) eines Flansches (15, 130) und/oder die Anflanschfläche (131, 132) des zweiten Bauteils (30) eine äußere reibwerterhöhende Beschichtung aus einer Chrom-Stahl-Legierung aufweisen oder beide Flanschkontaktflächen (121, 122, 133) der Flansche eine äußere reibwerterhöhende Beschichtung aus einer Chrom-Stahl-Legierung aufweisen, wobei die Verbindung der Bauteile (12, 13, 30, 130) als kraftschlüssige Verbindung ausgebildet ist.

2. Anordnung nach Anspruch 1, **dadurch gekennzeichnet, dass** die Beschichtung oder die Beschichtungen aus der Chrom-Stahl-Legierung unter Verwendung eines Lichtbogenverfahrens auf die jeweilige Flanschkontaktfläche (121, 122, 133) und/oder Anflanschfläche (131, 132) aufgebracht ist oder sind.

3. Anordnung nach Anspruch 1 oder 2, **dadurch gekennzeichnet, dass** die Bauteile (12, 13, 30, 130) unter Verwendung von Verbindungselementen, vorzugsweise Schrauben oder Bolzen, miteinander vorgespannt sind.

4. Anordnung nach einem der Ansprüche 1 bis 3, **dadurch gekennzeichnet, dass** zwischen den Flanschkontaktflächen (121, 122, 133) der Flansche ein oder mehrere Verbindungszwischenkörper (20) angeordnet sind oder zwischen der Flanschkontaktfläche (21, 122) des ersten Bauteils (12, 13, 130) und der Anflanschfläche (131, 132) des zweiten Bauteils (30) ein oder mehrere Verbindungszwischenkörper (20) angeordnet sind, wobei insbesondere der oder die Verbindungszwischenkörper (20) wenigstens auf einer oder auf beiden Kontaktflächen, die den Flanschkontaktflächen (121, 122, 133) der Flansche gegenüberliegend angeordnet sind, mit einer Beschichtung aus einer Chrom-Stahl-Legierung versehen sind.

5. Anordnung nach Anspruch 4, **dadurch gekennzeichnet, dass** die Verbindungszwischenkörper (20) plattenförmig oder klötzchenartig ausgebildet sind.

6. Anordnung nach Anspruch 4 oder 5, **dadurch gekennzeichnet, dass** die Verbindungszwischenkörper (20) bei oder durch Anordnung zwischen dem ersten Bauteil (12, 13, 30, 130) und dem zweiten Bauteil (12, 13, 30, 130) eine Art segmentierten Ring, insbesondere segmentierten Kreisring, oder Teile davon bilden.

7. Anordnung nach einem der Ansprüche 4 bis 6, **dadurch gekennzeichnet, dass** die Verbindungszwischenkörper (20) mit dem ersten Bauteil (12, 13, 30, 130) und/oder den zweiten Bauteil (12, 13, 30, 130) mechanisch unter Verwendung von Montierelementen, insbesondere Schrauben oder Klammern oder dergleichen, verbunden sind.

8. Anordnung nach einem der Ansprüche 1 bis 7, **dadurch gekennzeichnet, dass** die Flanschkontaktfläche (121, 122, 133) des ersten Bauteils (12, 13, 130) und die Anflanschfläche (131, 132) oder die Flanschkontaktflächen (121, 122, 133) des zweiten Bauteils (12, 13, 30, 130) ringartig und/oder geschlossen ausgebildet sind.

9. Anordnung nach einem der Ansprüche 1 bis 8, **dadurch gekennzeichnet, dass** das erste Bauteil (12, 13, 30, 130) als Rotorwelle (12) und das zweite Bauteil (12, 13, 30, 130) als Rotorarretierscheibe (30) ausgebildet sind oder dass das erste Bauteil (12, 13, 30, 130) als Getriebeeingangswelle (130) und das zweite Bauteil (12, 13, 30, 130) als Rotorarretierscheibe (30) ausgebildet sind.

10. Anordnung nach einem der Ansprüche 1 bis 9, **dadurch gekennzeichnet, dass** die Verbindung der Bauteile (12, 13, 30, 130) als lösbare Verbindung, insbesondere querkraftbelastete und/oder torsionsbelastete, Verbindung oder Schraubverbindung ausgebildet ist.

11. Anordnung nach einem der Ansprüche 1 bis 10, **dadurch gekennzeichnet, dass** das erste Bauteil (12, 13, 30, 130) oder das zweite Bauteil (12, 13, 30, 130) als Gussbauteil ausgebildet ist.

12. Verwendung einer Beschichtung für eine Anordnung von Bauteilen (12, 13, 30, 130) einer Windenergieanlage, wobei die Anordnung nach einem der Ansprüche 1 bis 11 ausgebildet ist.

13. Windenergieanlage (WEA) mit einer Anordnung von Bauteilen (12, 13, 30, 130) nach einem der Ansprüche 1 bis 11.

14. Verfahren zum Bearbeiten wenigstens eines Bauteils einer Windenergieanlage für eine Anordnung nach einem der Ansprüche 1 bis 11, wobei insbesondere das oder die Bauteile der Windenergieanlage mit einem Durchmesser von mehr als 0,5 m, vorzugsweise mehr als 1,0 m, weiter vorzugsweise mehr als 1,5 m, ausgebildet sind und miteinander verbunden werden oder sind, wobei insbesondere die zu verbindenden Bauteile jeweils einander zugewandte Kontaktflächen aufweisen und im verbundenen Zustand die Bauteile miteinander verspannt sind oder werden, **dadurch gekennzeichnet, dass** wenigstens eine Kontaktfläche der miteinander zu verbindenden Bauteile mit einer Chrom-Stahl-Legierung beschichtet wird.

## Claims

1. An arrangement of two components (12, 13, 30) of a wind power plant, wherein a first component (12, 13) has a flange (15, 130) with a flange contact surface (121, 122, 133) and wherein the second component (30) has a flange-mounting surface (131, 132) for the flange (15, 130) of the first component (12, 13) or the second component (12, 13) has a flange (15, 130) with a flange contact surface (122, 133), wherein the flange contact surface (122, 133) of the first component (12, 13) and the flange-mounting surface (131, 132) of the second component (30) are arranged opposite each other or wherein the flange contact surfaces (122, 121) of both components (12, 13, 30, 130) are arranged opposite each other, **characterized in that** at least one flange contact surface (121, 122, 133) of a flange (15, 130) and/or the flange-mounting surface (131, 132) of the second component (30) has an outer friction-coefficient-increasing coating made of a chromium steel alloy or both flange contact surfaces (121, 122, 133) of the flange have an outer friction-coefficient-increasing coating made of a chromium steel alloy, wherein the connection of the components (12, 13, 30, 130) is designed as a frictional connection.

2. The arrangement according to claim 1, **characterized in that** the coating or the coatings made of the chromium steel alloy is or are applied to the respective flange contact surface (121, 122, 133) and/or flange-mounting surface (131, 132) using an arc welding process.

3. The arrangement according to claim 1 or 2, **characterized in that** the components (12, 13, 30, 130) are pretensioned together using connection elements, preferably screws or bolts.

4. The arrangement according to one of claims 1 to 3, **characterized in that** one or more connection intermediate bodies (20) are arranged between the flange contact surfaces (121, 122, 133) of the flange or one or more connection intermediate bodies (20) are arranged between the flange contact surface (21, 122) of the first component (12, 13, 130) and of the flange-mounting surface (131, 132) of the second component (30), wherein, in particular, the connection intermediate body or bodies (20) are arranged at least on one or on both contact surfaces, which are arranged opposite the flange contact surfaces (121, 122, 133) of the flange and provided with a coating made of a chromium steel alloy.

5. The arrangement according to claim 4, **characterized in that** the connection intermediate bodies (20) are designed in a plate-like or block-like manner.

6. The arrangement according to claim 4 or 5, **characterized in that** the connection intermediate bodies (20) form a type of segmented ring, in particular segmented circular ring, or parts of it through arrangement between the first component (12, 13, 30, 130) and the second component (12, 13, 30, 130).

7. The arrangement according to one of claims 4 to 6, **characterized in that** the connection intermediate bodies (20) are mechanically connected with the first component (12, 13, 30, 130) and/or the second component (12, 13, 30, 130) using mounting elements, in particular screws or clamps or the like.

8. The arrangement according to one of claims 1 to 7, **characterized in that** the flange contact surface (121, 122, 133) of the first component (12, 13, 130) and the flange-mounting surface (131, 132) or the flange contact surfaces (121, 122, 133) of the second component (12, 13, 30, 130) are designed annularly and/or closed.

9. The arrangement according to one of claims 1 to 8, **characterized in that** the first component (12, 13, 30, 130) is designed as a rotor shaft (12) and the second component (12, 13, 30, 130) as a rotor locking disk (30) or **in that** the first component (12, 13, 30, 130) is designed as a gearbox input shaft (130) and the second component (12, 13, 30, 130) as a rotor locking disk (30).

10. The arrangement according to one of claims 1 to 9, **characterized in that** the connection of the components (12, 13, 30, 130) is designed as a releasable connection, in particular, a transverse-force-loaded and/or torsionally loaded, connection or screw connection.

11. The arrangement according to one of claims 1 to 10, **characterized in that** the first component (12, 13, 30, 130) or the second component (12, 13, 30, 130) is designed as a cast component.

12. Use of a coating for an arrangement of components (12, 13, 30, 130) of a wind power plant, wherein the arrangement is designed according to one of claims 1 to 11.

13. A wind power plant (WEA) with an arrangement of components (12, 13, 30, 130) according to one of claims 1 to 11.

14. A method for processing at least one component of a wind power plant for an arrangement according to one of claims 1 to 11, wherein, in particular, the component(s) of the wind power plant are designed with a diameter of more than 0.5 m, preferably more than 1.0 m, even more preferably more than 1.5 m, and are interconnected, wherein in particular the components to be connected each have facing contact surfaces and, in the connected state, the components are tensioned with each other, **characterized in that** at least one contact surface of the components to be interconnected is coated with a chromium steel alloy.

## Revendications

1. Agencement de deux éléments de construction (12, 13, 30) d'une éolienne, dans lequel un premier élément (12, 13) présente une bride (15, 130) ayant une surface (121, 122, 133) de contact de bride, et dans lequel le deuxième élément (30) comporte une surface de bridage (131, 132) pour la bride (15, 130) du premier élément (12, 13), ou dans lequel le deuxième élément (12, 13) comporte une bride (15, 130) ayant une surface (122, 133) de contact de bride, la surface (122, 133) de contact de bride du premier élément (12, 13) et la surface de bridage (131, 132) du deuxième élément (30) étant disposées de façon opposées l'une à l'autre, ou les surfaces de contact de bride (122, 121) des deux éléments (12, 13 , 30, 130) étant disposées de façon opposées l'une à l'autre, **caractérisé en ce qu'**au moins une parmi la surface de contact de bride (121, 122, 133) d'une bride (15, 130) et / ou la surface de bridage (131, 132) du deuxième élément (30) comprend un revêtement extérieur augmentant le coefficient de friction, fait en un alliage d'acier au chrome, ou **en ce que** les deux surfaces (121, 122, 133) de contact de bride que comprennent les brides ont un revêtement extérieur augmentant le coefficient de friction, fait en un alliage d'acier au chrome, la liaison des éléments (12, 13, 30, 130) étant sous la forme d'une liaison par force.

2. Agencement selon la revendication 1, **caractérisé en ce que** le revêtement ou les revêtements en alliage d'acier au chrome sont appliqués au moyen d'un procédé de soudage à l'arc sur les surfaces (121, 122, 133) de contact de bride respectives et / ou sur une surface de bridage (131, 132).

3. Agencement selon la revendication 1 ou la revendication 2, **caractérisé en ce que** les éléments (12, 13, 30, 130) sont reliés ensemble à l'aide d'éléments de liaison, de préférence des vis ou des boulons.

4. Agencement selon l'une des revendications 1 à 3, **caractérisé en ce qu'**entre les surfaces (121, 122, 133) de contact de bride que comprend la bride, un ou plusieurs organes intermédiaires (20) de liaison sont disposés, ou, entre la surface (21, 122) de contact de bride du premier élément (12 , 13, 130) et la surface de bridage (131, 132) du deuxième élément (30), un ou plusieurs organes intermédiaires (20) de liaison sont disposés, en particulier le ou les organes intermédiaires (20) de liaison et au moins une ou les deux surfaces de contact, dont les surfaces (121, 122, 133) de contact de bride que comprennent les brides sont disposées de façon opposée, sont pourvus d'un revêtement en alliage d'acier au chrome.

5. Agencement selon la revendication 4, **caractérisé en ce que** les organes intermédiaires (20) de liaison sont en forme de plaque ou sont sous la forme de plots.

6. Agencement selon la revendication 4 ou la revendication 5, **caractérisé en ce que** les organes intermédiaires (20) de liaison, ou des parties de ceux-ci, forment une sorte d'anneau segmenté, notamment une couronne segmentée, par un agencement entre le premier élément (12, 13, 30, 130) et le deuxième élément (12, 13, 30, 130).

7. Agencement selon l'une des revendications 4 à 6, **caractérisé en ce que** les organes intermédiaires (20) de liaison sont mécaniquement reliés au premier élément (12, 13, 30, 130) et / ou au deuxième élément (12, 13, 30, 130) par l'utilisation d'éléments de fixation, en particulier des vis ou des clips ou similaires.

8. Agencement selon l'une des revendications 1 à 7, **caractérisé en ce que** la surface de contact de bride (121, 122, 133) du premier élément (12, 13, 130) et la surface de bridage (131, 132), ou les surfaces de contact de la bride (121, 122, 133) du deuxième élément (12, 13, 30, 130) sont en forme d'anneau et / ou sont fermées.

9. Agencement selon l'une des revendications 1 à 8, **caractérisé en ce que** le premier élément (12, 13, 30, 130) est formé par l'arbre de rotor (12) et **en ce que** le deuxième élément (12, 13, 30, 130) est formé par le disque de blocage du rotor (30), ou **en ce que** le premier élément (12, 13, 30, 130) est formé par l'arbre d'entrée de transmission (130) et le deuxième élément (12, 13, 30, 130) est formé par le disque de blocage du rotor (30).

10. Agencement selon l'une quelconque des revendications 1 à 9, **caractérisé en ce que** l'assemblage des éléments (12, 13, 30, 130) est aménagé selon une liaison amovible, en particulier sous la forme d'une liaison à effort transversal et / ou à effort de torsion, ou d'une liaison par vissage.

11. Agencement selon l'une des revendications 1 à 10, **caractérisé en ce que** le premier élément (12, 13, 30, 130) ou le deuxième élément (12, 13, 30, 130) est sous la forme d'une pièce coulée.

12. Utilisation d'un revêtement pour un agencement d'éléments (12, 13, 30, 130) d'une éolienne, dans laquelle l'agencement est conçu selon l'une quelconque des revendications 1 à 11.

13. Éolienne (WEA) avec un agencement d'éléments (12, 13, 30, 130) selon l'une des revendications 1 à 11.

14. Procédé de traitement d'au moins un élément d'une éolienne pour un agencement selon l'une des revendications 1 à 11, dans lequel, en particulier, le ou lesdits éléments de l'éolienne ont un diamètre supérieur à 0,5 m, de préférence supérieur à 1,0 m, et de manière encore préférée supérieur à 1,5 m, et sont reliés entre eux ou aptes à être reliés, en particulier chacun des éléments à relier présente des surfaces de contact se faisant mutuellement face, et les éléments sont serrés ou aptes à être serrés les uns par rapport aux autres dans l'état de liaison, **caractérisé en ce qu'**au moins une surface de contact reliée à l'autre élément est revêtue d'un alliage d'acier au chrome.
